# EUROPEAN PATENT APPLICATION

(11) **EP 4 503 153 A1**
(43) Date of publication of application: **05.02.2025**
(21) Application number: 23774627.6
(22) Date of filing: 13.03.2023
(51) Int. Cl.: H01M 4/02, H01G 11/24, H01G 11/30, H01G 11/86, H01M 4/04, H01M 4/13, H01M 4/62

(54) **ELECTRODE, NONAQUEOUS ELECTROLYTE SECONDARY BATTERY AND METHOD FOR PRODUCING ELECTRODE**

(30) Priority: 24.03.2022 JP 2022048757
(71) Applicant: Panasonic Intellectual Property Management Co., Ltd., Kadoma-shi, Osaka 571-0057 (JP)
(72) Inventor: IZUMI Reiko, Kadoma-shi, Osaka 571-0057 (JP); YAMASHITA Hiroki, Kadoma-shi, Osaka 571-0057 (JP)
(74) Representative: Eisenführ Speiser
(86) International application number: PCT/JP2023/009539
(87) International publication number: WO 2023/182030

(57) **Abstract**

A composite material sheet (12), which is a constituent of an electrode (10) that is an example of the embodiment of the present invention, contains an active material (21) and a fibrous binder (22). With respect to the binder (22), a polytetrafluoroethylene is contained as a main component; and in a solid state 19F-NMR analysis, the ratio of the area of a second peak to the area of a first peak that is detected at δ = -122 ppm and assigned to F in a straight chain moiety is 0.01% to 5.0%, the second peak being other than the first peak and a spinning side band thereof, while being present between δ = -60 ppm and δ = -200 ppm.

## Description

### TECHNICAL FIELD

The present disclosure relates to an electrode, a non-aqueous electrolyte secondary battery comprising the electrode, and a method for manufacturing an electrode.

### BACKGROUND ART

An electrode of a non-aqueous electrolyte secondary battery such as a lithium-ion battery is typically produced by a wet method including applying an electrode mixture slurry including an active material, a binder, and others to a surface of a metal foil as a core, and then drying and compressing the coating film. In this case, a problem is that migration, which is travelling of the binder during drying of the coating film, easily occurs. The migration of the binder increases the amount of the binder on the surface side compared with the core side of the coating film (electrode mixture layer), leading to uneven distribution of the binder in a thickness direction of the electrode mixture layer.

A dry method has been investigated in recent years including stretching and forming an electrode mixture into a sheet to produce a mixture sheet and joining the sheet over a core to manufacture an electrode. Patent Literature 1 discloses an electrode mixture sheet produced by mixing an active material, a fibrillable binder such as polytetrafluoroethylene (PTFE), and a conductive agent using a mill, to fibrillate PTFE.

### CITATION LIST

### PATENT LITERATURE

PATENT LITERATURE 1: Japanese Unexamined Patent Application Publication No. 2019-512872

### SUMMARY

When the mixture sheet is produced through the dry method, a superior kneading property between the active material and the binder, and a superior stretching property of the sheet are required. When the kneading property of the raw materials or the stretching property of the sheet is inferior, a dense sheet with a high strength cannot be obtained, and a larger number of times of stretching through a larger number of rollers are required in order to obtain a sheet with a target thickness. An advantage of the present disclosure lies in provision of an electrode having a superior productivity and having a mixture sheet with a high strength.

According to one aspect of the present disclosure, there is provided an electrode including: a core; and a mixture sheet joined over a surface of the core, wherein the mixture sheet includes an active material and a fibrous binder, and the binder has polytetrafluoroethylene as a primary component, and, in the binder, a ratio, with respect to an area of a first peak derived from F of a straight chain portion detected at δ = -122 ppm in a solid state 19F-NMR measurement, of an area of a second peak present between δ = - 60 ppm and δ = -200 ppm, other than the first peak and a spinning side band of the first peak is greater than or equal to 0.01% and less than or equal to 5.0%.

According to another aspect of the present disclosure, there is provided a non-aqueous electrolyte secondary battery including the electrode described above. The structure of the electrode described above is desirably applied for a positive electrode.

According to another aspect of the present disclosure, there is provided a method of manufacturing an electrode, including: a first step in which an active material and a binder having polytetrafluoroethylene as a primary component are mixed, to produce an electrode mixture having a solids content concentration of substantially 100%, and in which the binder is fibrillated; a second step in which the electrode mixture is shaped and rolled into a sheet shape, to produce a mixture sheet; and a third step in which the mixture sheet is joined over a surface of the core, wherein, in the first step or before the first step, a branching process of polytetrafluoroethylene is applied so that a ratio, with respect to an area of a first peak derived from F in a straight chain portion detected at δ = -122 ppm in a solid state 19F-NMR measurement, of an area of a second peak present between δ = -60 ppm and δ = -200 ppm, other than the first peak and a spinning side band of the first peak is greater than or equal to 0.01% and less than or equal to 5.0%.

According to an aspect of the present disclosure, an electrode having a superior productivity and having a mixture sheet of a high strength can be provided. The mixture sheet of an aspect of the present disclosure has a smooth surface and a high tensile strength, and contributes to, for example, improvement of endurance (cycle characteristic) when the mixture sheet is applied to an electrode of a non-aqueous electrolyte secondary battery.

### BRIEF DESCRIPTION OF DRAWINGS

FIG. 1 is a cross-sectional view of an electrode of an example of an embodiment.
FIG. 2 is a view illustrating an electrode mixture of an example of an embodiment.
FIG. 3 is a view illustrating the step of producing an electrode mixture in a manufacturing process of an electrode of an example of an embodiment.
FIG. 4 is a view illustrating the step of producing a mixture sheet and the step of joining the mixture sheet over a core in a manufacturing process of an electrode of an example of an embodiment.

### DESCRIPTION OF EMBODIMENTS

As a result of an intensive review focused on a molecular structure of the binder, the present inventors have found that a mixture sheet having a superior productivity and with a high strength can be obtained by employing a fibrous binder having a predetermined branch structure. More specifically, it was found that the productivity and strength of the mixture sheet can be specifically improved when a predetermined branch structure is introduced such that a ratio, with respect to an area of a first peak derived from F of a straight chain portion detected at δ = -122 ppm in a solid state 19F-NMR measurement, of an area of a second peak present between δ = -60 ppm and δ = -200 ppm, other than the first peak and a spinning side band of the first peak, is greater than or equal to 0.01% and less than or equal to 5.0%.

That is, the superior productivity and high strength of the mixture sheet cannot be simultaneously achieved not only when there is no branch structure of the fibrous binder or when the amount of branch structure is too small, but also when the amount of branch structure is too large. A mixture sheet of a superior productivity and a high strength can be obtained only when a predetermined branch structure is introduced.

An embodiment of an electrode according to the present disclosure will now be described in detail. Embodiment(s) described below are merely examples, and the present disclosure is not limited to the following embodiment(s). Drawings referred to in the description of embodiment(s) are schematically illustrated, and a size ratio and the like of constituents illustrated in Drawings should be determined while considering the following description. Constitutions composed by selectively combining a plurality of embodiments and modified examples described hereinafter are included in the present disclosure.

Although the electrode according to the present disclosure is suitable for a non-aqueous electrolyte secondary battery such as a lithium-ion battery and a lithium secondary battery, the electrode may alternatively be applied for a battery including an aqueous electrolyte or a power storage device such as a capacitor. Hereinafter, an electrode for a non-aqueous electrolyte secondary battery will be exemplified to make a description. The constitution and manufacturing method of the electrode for a non-aqueous electrolyte secondary battery according to the present disclosure may be applied for a negative electrode, but is particularly desirably applied for a positive electrode. The non-aqueous electrolyte secondary battery comprises an electrode assembly including a positive electrode and a negative electrode, and a non-aqueous electrolyte. The non-aqueous electrolyte includes, for example, a non-aqueous solvent, and lithium salt dissolved in the non-aqueous solvent.

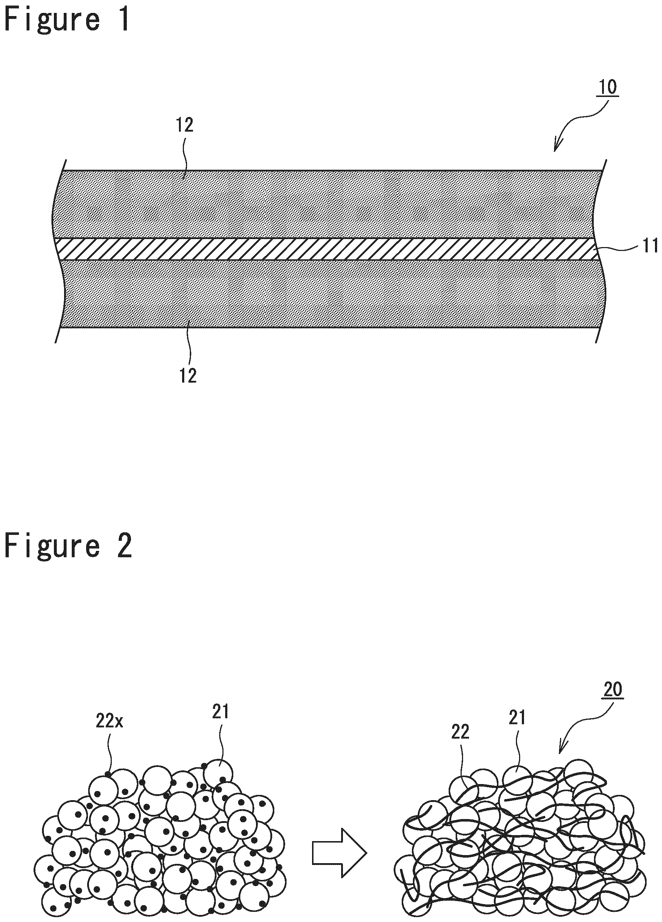

FIG. 1 is a cross-sectional view of an electrode 10 of an example of an embodiment. As illustrated in FIG. 1, the electrode 10 comprises a core 11 and a mixture sheet 12 joined over a surface of the core 11. The mixture sheet 12 is desirably joined over both surfaces of the core 11. The mixture sheet 12 is produced by forming an electrode mixture 20 (see FIG. 2), which will be described later, into a sheet, and is joined over the core 11 to serve as an electrode mixture layer. The electrode 10 may be an elongated electrode for forming a wound electrode assembly, or may be a rectangular electrode for forming a layered electrode assembly.

For the core 11, a metal foil, a film having a metal layer formed on a surface thereof, or the like may be used. A thickness of the core 11 is, for example, greater than or equal to 5 µm and less than or equal to 20 µm. When the electrode 10 is the positive electrode, a metal foil including aluminum as a primary component may be used for the core 11. In a case of the negative electrode, a metal foil including copper as a primary component may be used. The primary component herein means a component in the highest mass proportion. The core 11 may be an aluminum foil made of substantially 100% aluminum, or may be a copper foil made of substantially 100% copper.

The mixture sheet 12 includes an active material 21 and a binder 22. The mixture sheet 12 is produced by forming the electrode mixture 20 including the active material 21 and the binder 22 into a sheet. As will be described later in detail, the binder 22 is a fibrillated fibrous binder, and is polytetrafluoroethylene into which a predetermined branch structure is introduced. A thickness of the mixture sheet 12 applied for the non-aqueous electrolyte secondary battery is, for example, greater than or equal to 50 µm and less than or equal to 150 µm, desirably greater than or equal to 80 µm and less than or equal to 140 µm, and more desirably greater than or equal to 100 µm and less than or equal to 130 µm.

The mixture sheet 12 may further include a conductive agent. In particular, when serving as a positive electrode mixture layer, the mixture sheet 12 desirably includes the conductive agent. Examples of the conductive agent included in the mixture sheet 12 include carbon materials such as carbon black such as acetylene black and Ketjenblack, carbon nanotube (CNT), and graphite. When the electrode 10 is the positive electrode, a desirable example of the content of the conductive agent in the mixture sheet 12 is greater than or equal to 0.2 mass% and less than or equal to 5.0 mass%.

For the active material of the positive electrode, a lithium-transition metal composite oxide is typically used. Examples of a metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. Among these metal elements, at least one selected from Ni, Co, and Mn is desirably contained. The content of the positive electrode active material is desirably greater than or equal to 85 mass% and less than or equal to 99 mass%, and more desirably greater than or equal to 90 mass% and less than or equal to 99 mass% relative to a mass of the mixture sheet 12 (the desirable content of the positive electrode active material also applies to a desirable content of a negative electrode active material).

The positive electrode active material is of secondary particles formed by aggregation of a plurality of primary particles. A median diameter (D50) on a volumetric basis of the positive electrode active material is desirably greater than or equal to 3 µm and less than or equal to 30 µm. The D50 means the particle diameter of the 50th percentile from the smaller particle diameter side in a particle size distribution on a volumetric basis, and is also called a median diameter. The particle size distribution of the positive electrode active material may be measured using a laser diffraction-type particle size distribution analyzer (for example, MT3000II, manufactured by MicrotracBEL Corp.) with water as a dispersion medium.

For the active material of the negative electrode, for example, carbon-based active materials are used, including: natural graphite such as flake graphite, massive graphite, and amorphous graphite; and an artificial graphite such as massive artificial graphite (MAG) and graphitized mesophase-carbon microbead (MCMB). Alternatively, as the negative electrode active material, an active material containing Si, Sn, or others that forms an alloy with lithium may be used.

When the mixture sheet 12 is divided into three equal parts in a thickness direction, the parts being designated as a first region, a second region, and a third region from a side of the core 11, a content (a) of the binder 22 in the first region, a content (b) of the binder 22 in the second region, and a content (c) of the binder 22 in the third region, desirably satisfy (c - a)/(a + b + c) ≤ ±10%, and more desirably satisfy (c - a)/(a + b + c) ≤ ±5%. In the electrode 10, the binder 22 is substantially uniformly present throughout the mixture sheet 12 without uneven presence in part of the mixture sheet 12.

The density of the mixture sheet 12 is not particularly limited, but when the mixture sheet 12 serves as the positive electrode mixture layer, the density is desirably greater than or equal to 2.5 g/cc and less than or equal to 4.5 g/cc, more desirably greater than or equal to 3.0 g/cc and less than or equal to 4.2 g/cc, and particularly desirably greater than or equal to 3.0 g/cc and less than or equal to 4.0 g/cc. In the electrode 10, an intermediate layer interposed between the core 11 and the mixture sheet 12 may be provided. The intermediate layer, which includes, for example, a conductive agent and a binder, improves joining strength of the mixture sheet 12 over the core 11, and reduces interface resistance.

FIG. 2 is a view illustrating an example of the electrode mixture 20, and also illustrates a state of the binder 22 before being fibrillated (binder 22x). As illustrated in FIG. 2, the electrode mixture 20 forming the mixture sheet 12 includes the active material 21 and the fibrillated fibrous binder 22. The electrode mixture 20 may further include the conductive agent. The electrode mixture 20 may be produced by, for example, fibrillating the binder 22x to form the fibrous binder 22 in a process of stirring and mixing the active material 21, the particle-form binder 22x, and the conductive agent (not illustrated).

The fibrous binder 22 is the binder fibrillated by applying a predetermined shearing force to the particle-form binder 22x, as noted above. The fibrous binder 22 entwines particles of the active material 21 to bind the particles to each other, which enables the electrode mixture 20 to be formed into a single sheet. The binder 22x may be any fibrillable material that adheres to the particle surfaces of the active material 21 and that has a reagent resistance against an electrolyte liquid, and has polytetrafluoroethylene (PTFE) as the primary component. The binder 22x may further include components other than the PTFE particles such as polyvinylidene fluoride (PVdF) within a range of not adversely affecting the objective of the present disclosure, or may substantially include only PTFE particles.

An average particle diameter of the PTFE particles is not particularly limited, but is desirably greater than or equal to 100 µm and less than or equal to 500 µm, and more desirably greater than or equal to 200 µm and less than or equal to 400 µm. The average particle diameter of the PTFE particles may be determined by observing the PTFE particles with a scanning electron microscope (SEM). Specifically, randomly selected 100 particles are specified, a diameter of a circumscribing circle of each of the 100 particles is measured, and the measured values are averaged to determine the average particle diameter.

The binder 22 (PTFE) has a predetermined branch structure. A PTFE molecule having a branch structure is a molecule having one or more branch points within the molecule. On the other hand, a PTFE molecule of a straight chain structure refers to a molecule which does not have the branch point within the molecule. The binder 22 may be formed from solely the PTFE molecules having the branch structure, or may be a mixture of the PTFE molecules having the branch structure and the PTFE molecules having the straight chain structure. When the binder 22 is the mixture, it is sufficient that the molecules satisfy a condition of an area ratio (Z) to be described later, and that the mixture as a whole satisfies the condition of the area ratio (Z).

The binder 22 satisfies a condition that a ratio, with respect to an area of a first peak derived from F of a straight chain portion detected at δ = -122 ppm in a solid state 19F-NMR measurement, of an area of a second peak present between δ = -60 ppm and δ = -200 ppm, other than the first peak and a spinning side band of the first peak (hereinafter, "area ratio (Z)") is greater than or equal to 0.01% and less than or equal to 5.0%. A lower limit of the area ratio (Z) is desirably 0.02%, and is more desirably 0.05%. An upper limit of the area ratio (Z) is desirably 4.5%, is more desirably 2.0%, and is particular desirably 1.5%.

The first peak is a peak derived from F of a straight chain portion (-CF₂-CF₂-CF₂-) of PTFE, and appears sharply at δ = -122 ppm. The second peak is a peak derived primarily from F of a branch portion of PTFE, but also partly includes a peak derived from F of the straight chain portion. The area ratio (Z) approximately indicates a ratio of the branch structure introduced to the molecules of the binder 22. The peak derived from F of the straight chain portion included in the second peak substantially does not affect the calculation of the ratio of the branch structure.

A solid state 19F-NMR spectrum of PTFE having the branch structure is disclosed in, for example, JP 2008-069280 A and Japanese Journal of Polymer Science and Technology, Vol. 60, No. 4, 145-157, 2003. The binder 22 has a similar 19F-NMR spectrum. In the following structural formula, peaks derived from F and labeled b~d and g are detected only in the branch structure, and peaks derived from F and labeled a, e, and f are detected both in the straight chain structure and the branch structure. The peak derived from F and labeled a is the first peak detected at δ = -122 ppm.

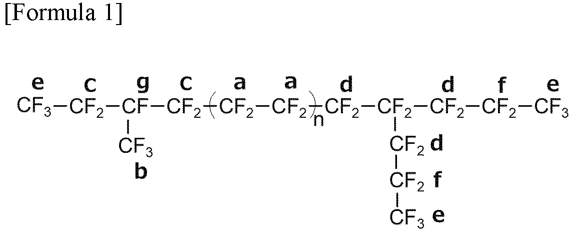

With the use of the binder 22 having the area ratio (Z) of the solid state 19F-NMR spectrum satisfying the above-described condition and into which the branch structure is introduced, the kneading property of the electrode mixture 20 and the stretching property of the mixture sheet can be improved, resulting in improvement of the sheet strength. It is sufficient that PTFE forming the binder 22 has the branch structure, but alternatively, at least a part of the molecules may be cross-linked. Introducing the cross-linkage structure can facilitate, for example, achieving both the superior productivity and the high strength of the mixture sheet 12.

The content of the binder 22 is desirably greater than or equal to 0.1 parts by mass and less than or equal to 5.0 parts by mass, is more desirably greater than or equal to 0.2 parts by mass and less than or equal to 3 parts by mass, and is particularly desirably greater than or equal to 0.3 parts by mass and less than or equal to 2 parts by mass per 100 parts by mass of the active material 21. When the content of the binder 22 is within the above range, the effect of modifying the mixture sheet 12 is more remarkable. As described above, the binder 22 is approximately uniformly contained throughout the mixture sheet 12. The binder 22 desirably has a crystallite size of greater than or equal to 20 nm and less than or equal to 32 nm. The crystallite size of the binder 22 is determined by X-ray diffractometry.

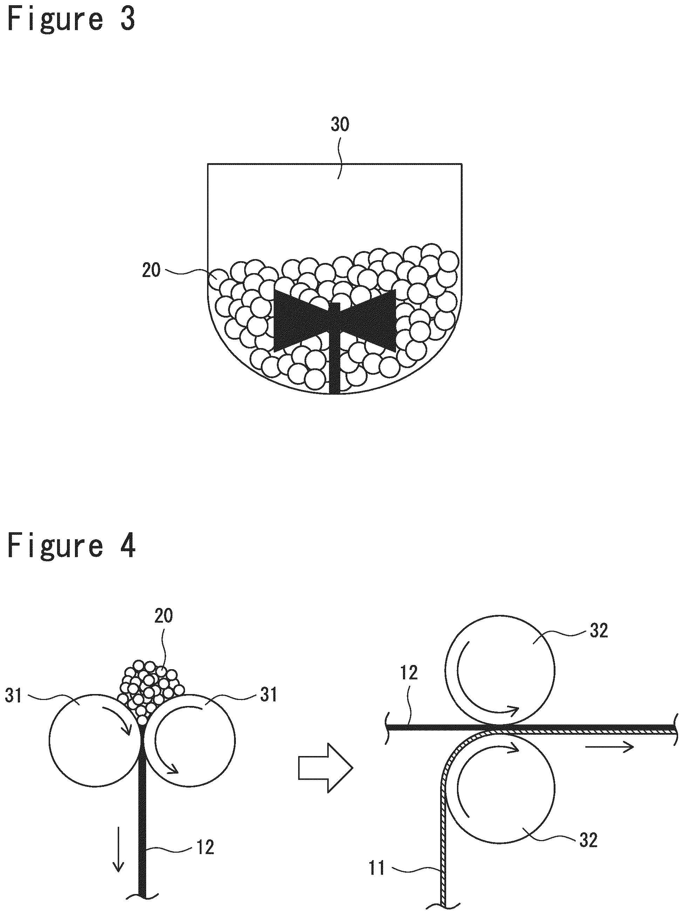

A method for manufacturing the electrode 10 will now be described with reference to FIG. 3 and FIG. 4. Although a method for manufacturing the positive electrode will be exemplified hereinafter, this manufacturing method may also be applied to manufacturing the negative electrode. FIG. 3 illustrates the step of mixing raw materials for a mixture to produce the electrode mixture 20. FIG. 4 illustrates the steps of rolling the electrode mixture 20 to produce the mixture sheet 12, and joining the mixture sheet 12 over the elongated core 11.

The electrode 10 is manufactured via the following steps:
(1) the first step of mixing the active material 21 and the binder to produce the electrode mixture 20 having a solids content concentration of substantially 100% (see FIG. 3);
(2) the second step of forming and rolling the electrode mixture 20 into a sheet to produce the mixture sheet 12 (see left side of FIG. 4); and
(3) the third step of joining the mixture sheet 12 over the surface of the core 11 (see right side of FIG. 4).

In the first through third steps, or before the first step, a branching process of PTFE is applied such that a ratio, with respect to an area of a first peak derived from F of a straight chain portion detected at δ = -122 ppm in a solid state 19F-NMR measurement, of an area of a second peak other than the first peak (area ratio (Z)) is greater than or equal to 0.01% and less than or equal to 5.0%.

As illustrated in FIG. 3, the mixture sheet 12 is produced by a dry process using the electrode mixture 20 having a solids content concentration of substantially 100%. In the dry process, a solvent is not used in mixing the raw materials for a mixture, and the electrode mixture 20 having a solids content concentration of substantially 100% is produced. The electrode mixture 20 is produced by, for example, stirring and mixing the active material 21, the particle-form binder 22x, and the conductive agent with a mixer 30. The particle binder 22x may be fibrillated at a certain degree before mixed with the other raw materials, namely before the above first step.

As the mixer 30, a conventionally known mechanical stirring mixer that may apply a mechanical shearing force may be used. Specific examples of the mixer 30 include a cutter mill (such as Wonder Crusher, manufactured by OSAKA CHEMICAL Co., Ltd.), a pin mill, a bead mill, a kneading machine (such as a kneader and a Banbury mixer), a planetary mixer, and a fine-particle composer (an apparatus generating a shearing force between: a rotor having a special shape and rotating at a high speed in a tank; and a collision plate). In the first step, the raw materials for a mixture are mixed and the particle-form binder 22x is fibrillated to form the fibrous binder 22.

A processing time of the first step (time for applying the shearing force to the raw materials for a mixture) is desirably within a few minutes, and for example, greater than or equal to 0.5 minutes and less than or equal to 10 minutes, which varies depending on the type of the mixer 30 and others. A too long processing time increases the amount of the conductive agent to be incorporated into the binder 22, which may deteriorate conductivity of the mixture sheet 12. The first step may include: the step of mixing the active material 21 and the conductive agent; and the step of mixing the mixture of the active material 21 and the conductive agent, and the binder. In this case, the amount of the conductive agent to be incorporated into the fibrous binder 22 may be reduced.

For dry-mixing the active material 21 and the conductive agent, a mechano-fusion method may be used. Applying the mechano-fusion method increases the bonding force of the conductive agent onto the particle surfaces of the active material 21. Examples of the mechano-fusion reactor include: Nobilta(R) or MECHANO FUSION(R), manufactured by HOSOKAWA MICRON CORPORATION; Hybridization System, manufactured by NARA MACHINERY CO., LTD.; BALANCE GRAN, manufactured by FREUND-TURBO CORPORATION; and COMPOSI, manufactured by NIPPON COKE & ENGINEERING CO., LTD.

In the production step of the mixture sheet 12, in the first through third steps, or before the first step, the branching process of PTFE is applied so that the area ratio (Z) is set to greater than or equal to 0.01% and less than or equal to 5.0%. As the branching process of PTFE, for example, there may be exemplified illuminating an electron beam or a radiation onto PTFE of the straight chain form. It is known that branching occurs when the electron beam or the radiation is illuminated on the PTFE molecules of the straight chain form. In addition, cross-linkage of the molecules may also progress. The degree of branching, that is, the area ratio (Z), may be controlled to a target range by suitably varying conditions such as power of the electron beam or the radiation, an illumination period, or the like.

The branching process of PTFE may be applied in any or all of the first through third steps, and, for example, the electron beam or the radiation may be illuminated when the active material 21 and the binder 22x (PTFE particles) are mixed and the PTFE particles are fibrillated in the first step, but desirably, PTFE particles which are branch-processed in advance are used. That is, desirably, PTFE particles illuminated with the electron beam or the radiation so that the predetermined branch structure is introduced are supplied to the first step described above.

In the production step of the mixture sheet 12, as the binder 22, only PTFE having the branch structure may be used, or PTFE having the branch structure and PTFE having the straight chain structure may be used in a mixed manner. For example, only PTFE particles having the branch structure and having the area ratio (Z) of greater than or equal to 0.01% and less than or equal to 5.0% may be supplied to the first step. Alternatively, a mixture powder obtained by mixing the PTFE particles having the branch structure and the PTFE particles having the straight chain structure, and with the area ratio (Z) adjusted to greater than or equal to 0.01% and less than or equal to 5.0%, may be supplied to the first step.

As illustrated in FIG. 4, the electrode mixture 20 is formed and rolled into a sheet with two rollers 31 to yield the mixture sheet 12. The two rollers 31 are disposed with a predetermined gap, and rotate in the same direction. The electrode mixture 20 is supplied into the gap between the two rollers 31 to be compressed with the two rollers 31, and to be stretched into a sheet. The two rollers 31 have, for example, the same diameter. The mixture sheet 12 may be passed through the gap between the two rollers 31 a plurality of times.

The thickness of the mixture sheet 12 may be regulated with, for example, the gap between the two rollers 31, the peripheral speed, and the number of times of the stretching process. In the rolling step, the electrode mixture 20 may be formed into a sheet using two rollers 31 having peripheral speeds differing by a factor of greater than or equal to two. Setting the different peripheral speeds of the two rollers 31 facilitates the thinning of the mixture sheet 12 to improve the productivity. The mixture sheet 12 may be further compressed to be dense. In this compressing step, a linear pressure of, for example, greater than or equal to 1 t/cm and less than or equal to 3 t/cm may be applied.

Then, the elongated mixture sheet 12 is joined over the surface of the elongated core 11, and the resultant is cut to a predetermined electrode size to obtain the electrode 10. Although FIG. 4 illustrates a state of the mixture sheet 12 joined over only one surface of the core 11, the mixture sheets 12 are joined over both surfaces of the core 11. The two mixture sheets 12 may be simultaneously joined over both the surfaces of the core 11. Alternatively, one mixture sheet 12 may be joined over one surface of the core 11, and then the other mixture sheet 12 may be joined over the other surface.

The mixture sheet 12 is laminated onto the surface of the core 11 using two rollers 32. For example, a temperature of the two rollers 32 may be room temperature, or less than or equal to 300°C, desirably less than or equal to 200°C. The linear pressure applied by the two rollers 32 is smaller than the linear pressure applied in the compressing step described above, and may be, for example, greater than or equal to 0.1 t/cm and less than or equal to 2 t/cm. On both the surfaces of the core 11 to be subjected to this laminating step, an intermediate layer may be formed.

### EXAMPLES

Hereinafter, the present disclosure will be further described by way of Examples, but the present disclosure is not limited to these Examples.

### <Example 1>

### [Production of Positive Electrode Mixture Sheet]

Using NOB300-Nobilta(R), manufactured by HOSOKAWA MICRON CORPORATION, 1000 g of a lithium-transition metal composite oxide being a positive electrode active material and 10 g of carbon black were mixed for 5 minutes to produce a carbon-coated positive electrode active material in which carbon black adhered to particle surfaces of the positive electrode active material. This carbon-coated positive electrode active material and PTFE particles (1) having the peak area ratio (Z) of 19F-NMR of 0.02% were fed into Wonder Crusher, manufactured by OSAKA CHEMICAL Co., Ltd., in a mass ratio of 101:0.8, and the mixture was subjected to a mixing process at room temperature at the number of rotation of Scale 5 for 5 minutes. The number of rotation of Wonder Crusher is maximum 28000 rpm at Scale 10.

The PTFE particles were fibrillated to form fibrous PTFE by the above-described mixing process, thereby obtaining a positive electrode mixture in which the carbon-coated positive electrode active material and the fibrous PTFE were uniformly dispersed. The obtained positive electrode mixture had a solids content concentration of 100%. This positive electrode mixture was passed through a gap between two rollers, and rolled to produce a positive electrode mixture sheet. The ratio between the peripheral speeds of the two rollers was 1:1.5. Then, the obtained positive electrode mixture sheet was passed through two rollers at room temperature to be compressed. The linear pressure applied in this compressing step was set to 1 t/cm.

A thickness and a tensile strength of the obtained positive electrode mixture sheet were measured. TABLE 1 shows measured values of the thickness and the tensile strength, along with the area ratio of 19F-NMR. The thickness of the sheet was measured using a micrometer. The tensile strength of the sheet was measured using a universal testing machine, with a condition of a tension speed of 2 cm/min. The kneading property in the mixing process of the positive electrode mixture was evaluated based on the following standards. The evaluation result is shown in TABLE 1.
○: Easily shapeable state with materials integrated.
△: Non-easily shapeable state with materials being powdery even after kneading.

### [Manufacture of Positive Electrode]

The positive electrode mixture sheet was disposed on an aluminum foil as a core, and the resulting stack of the positive electrode mixture sheet and the core was pressed (linear pressure: 1 t/cm) using two rollers at room temperature to obtain a positive electrode in which the positive electrode mixture sheets were joined over both surfaces of the core. The density of the positive electrode active material in the positive electrode mixture sheet was regulated to 3.6 g/cc. When the positive electrode mixture sheet (positive electrode mixture layer) was divided into three equal parts in a thickness direction, the parts being defined as a first region, a second region, and a third region from a side of the core, the content (a) of the fibrous PTFE in the first region, the content (b) of the fibrous PTFE in the second region, and the content (c) of the fibrous PTFE in the third region, satisfied (c - a) × 100/(a + b + c) = 0.01 (1%).

### <Example 2>

A positive electrode mixture sheet and a positive electrode were produced in a manner similar to Example 1 except that PTFE particles having a peak area ratio (Z) of the 19F-NMR of 0.06% were used in place of the PTFE particles (1), and were similarly evaluated.

### <Example 3>

A positive electrode mixture sheet and a positive electrode were produced in a manner similar to Example 1 except that PTFE particles having a peak area ratio (Z) of the 19F-NMR of 2.0% were used in place of the PTFE particles (1), and were similarly evaluated.

### <Example 4>

A positive electrode mixture sheet and a positive electrode were produced in a manner similar to Example 1 except that PTFE particles having a peak area ratio (Z) of the 19F-NMR of 4.5% were used in place of the PTFE particles (1), and were similarly evaluated.

### <Comparative Example 1>

A positive electrode mixture sheet and a positive electrode were produced in a manner similar to Example 1 except that PTFE particles having a peak area ratio (Z) of the 19F-NMR of 0.003% were used in place of the PTFE particles (1), and were similarly evaluated.

### <Comparative Example 2>

A positive electrode mixture sheet and a positive electrode were produced in a manner similar to Example 1 except that PTFE particles having a peak area ratio (Z) of the 19F-NMR of 7.0% were used in place of the PTFE particles (1), and were similarly evaluated.

**[TABLE 1]**

| | 19F-NMR Peak area ratio (%) | Kneading property | Sheet thickness /µm | Sheet strength /MPa |
|---|---|---|---|---|
| Example 1 | 0.02 | ○ | 128 | 0.052 |
| Example 2 | 0.06 | ○ | 120 | 0.054 |
| Example 3 | 0.4 | ○ | 108 | 0.054 |
| Example 4 | 2.0 | ○ | 101 | 0.046 |
| Example 5 | 4.5 | ○ | 100 | 0.041 |
| Comparative Example 1 | 0.003 | Δ | 154 | 0.052 |
| Comparative Example 2 | 7.0 | Δ | 98 | 0.023 |

As shown in TABLE 1, each of Examples had a better kneading property of the row materials and a better stretching property of the sheet in comparison to Comparative Example 1 (a case in which PTFE having a small amount of the branch structure was used). As a result, the thickness of the sheet obtained through a stretching process under the same condition is thinner in Examples. While the desirable thickness of the positive electrode mixture sheet is greater than or equal to 100 µm and less than or equal to 130 µm, in the case of Comparative Example 1, because the positive electrode mixture sheet is hard, it is not easy to realize such a thickness. In addition, while the tensile strength of a sheet is reduced as the thickness is thinned, the sheets of Examples 1 to 3 had strengths similar to or greater than the sheet of Comparative Example 1, although the thicknesses of the sheets of Examples 1 to 3 were thinner than the sheet of Comparative Example 1.

In the case where PTFE having the peak area ratio of the 19F-NMR of greater than 5% was used (Comparative Example 2), the strength of the positive electrode mixture sheet was significantly reduced, and it was difficult to realize the desirable sheet thickness. In other words, in the case where the amount of the branch structure introduced to PTFE is too large also, a high sheet strength cannot be realized. In addition, in Comparative Example 2, the kneading property of the row materials was also inferior.

### REFERENCE SIGNS LIST

10 Electrode, 11 Core, 12 Mixture sheet, 20 Electrode mixture, 21 Active material, 22, 22x Binder, 30 Mixer, 31, 32 Roller

## Claims

1. An electrode comprising:
a core; and
a mixture sheet joined over a surface of the core, wherein
the mixture sheet includes an active material and a fibrous binder, and
the binder has polytetrafluoroethylene as a primary component, and, in the binder, a ratio, with respect to an area of a first peak derived from F of a straight chain portion detected at δ = -122 ppm in a solid state 19F-NMR measurement, of an area of a second peak present between δ = -60 ppm and δ = -200 ppm, other than the first peak and a spinning side band of the first peak, is greater than or equal to 0.01% and less than or equal to 5.0%.

2. The electrode according to claim 1, wherein
when the mixture sheet is divided into three equal parts in a thickness direction, the parts being designated as a first region, a second region, and a third region from a side of the core, a content (a) of the binder in the first region, a content (b) of the binder in the second region, and a content (c) of the binder in the third region, satisfy (c - a)/(a + b + c) ≤ ±10%.

3. The electrode according to claim 1 or 2, wherein
a content of the binder is greater than or equal to 0.1 parts by mass and less than or equal to 5.0 parts by mass per 100 parts by mass of the active material.

4. A non-aqueous electrolyte secondary battery comprising:
the electrode according to any one of claims 1 to 3.

5. A method of manufacturing an electrode, comprising:
a first step in which an active material and a binder having polytetrafluoroethylene as a primary component are mixed, to produce an electrode mixture having a solids content concentration of substantially 100%, and in which the binder is fibrillated;
a second step in which the electrode mixture is shaped and rolled into a sheet shape, to produce a mixture sheet; and
a third step in which the mixture sheet is joined over a surface of the core, wherein
in the first through third steps, or before the first step, a branching process of polytetrafluoroethylene is applied so that a ratio, with respect to an area of a first peak derived from F of a straight chain portion detected at δ = -122 ppm in a solid state 19F-NMR measurement, of an area of a second peak other than the first peak is greater than or equal to 0.01% and less than or equal to 5.0%.

6. The method of manufacturing the electrode according to claim 5, wherein
as the binder, only polytetrafluoroethylene having a branch structure is used, or polytetrafluoroethylene having the branch structure and polytetrafluoroethylene having a straight chain structure are used in a mixed manner.
